## Europäisches Patentamt
## European Patent Office
## Office européen des brevets

(11) Veröffentlichungsnummer: **0 127 040**
**B1**

(12)

# EUROPÄISCHE PATENTSCHRIFT

(45) Veröffentlichungstag der Patentschrift:
**29.10.86**

(51) Int. Cl.⁴: **H 04 N 5/44,** H 04 N 5/21

(21) Anmeldenummer: **84105408.3**

(22) Anmeldetag: **12.05.84**

(54) Videoempfangsgerät mit einer Gruppenlaufzeit-Korrekturschaltung.

(30) Priorität: **26.05.83 DE 3319011**

(43) Veröffentlichungstag der Anmeldung:
**05.12.84 Patentblatt 84/49**

(45) Bekanntmachung des Hinweises auf die Patenterteilung:
**29.10.86 Patentblatt 86/44**

(84) Benannte Vertragsstaaten:
**AT CH DE FR GB IT LI NL**

(56) Entgegenhaltungen:
EP - A - 0 056 649
DE - B - 1 537 564
DE - B - 2 832 621
US - A - 4 091 418
US - A - 4 335 396

(73) Patentinhaber: **International Standard Electric Corporation, 320 Park Avenue, New York New York 10022 (US)**

(84) Benannte Vertragsstaaten: **CH FR GB IT LI NL AT**

(73) Patentinhaber: **Standard Elektrik Lorenz Aktiengesellschaft, Hellmuth-Hirth-Strasse 42, D-7000 Stuttgart 40 (DE)**

(84) Benannte Vertragsstaaten: **DE**

(72) Erfinder: **Schepers, Charles, Reickestrasse 8, D-7500 Karlsruhe 41 (DE)**

(74) Vertreter: **Beck-Seyffer, Karl Heinz, Dipl.-Ing. et al, Standard Elektrik Lorenz AG Patent- und Lizenzwesen Postfach 300 929 Kurze Strasse 8, D-7000 Stuttgart 30 (DE)**

## Beschreibung

Die Erfindung betrifft ein Videoempfangsgerät der im Oberbegriff des Patentanspruches 1 angegebenen Art.

Bei der Übertragung von Farbfernsehsignalen spielt die Phasenbeziehung zwischen den Farbartsignalen eine wesentliche Rolle. Unterliegen die einzelnen Farbartsignale im Video-Empfangsgerät unterschiedlichen Laufzeiten, dann treten Farbtonverfälschungen auf. Deshalb ist es erforderlich, die Gruppenlaufzeit im Durchlassbereich der Farbartsignale gleichmässig zu gestalten. Insbesondere bei einem plötzlichen Farbwechsel können sich helle und dunkle Streifen nebeneinander bilden, wenn für die unterschiedlichen Farbsignale unterschiedliche Gruppenlaufzeiten bestehen.

Insbesondere die zur Übertragung der Videosignale in den Videoempfangsgeräten erforderlichen Spulenfilter rufen eine Gruppenlaufzeitverzerrung dergestalt hervor, dass die Farbsignale an den Bandgrenzen eine höhere Durchlaufzeit aufweisen als in der Bandmitte. Aus diesem Grunde führen in einzelnen Ländern die Sender zur Übertragung von Videoinformationen eine Gruppenlaufzeit-Vorentzerrung durch, die die Gruppenlaufzeit-Verzerrung in den Empfangsgeräten in etwa kompensiert.

Aus der europäischen Patentanmeldung mit der Veröffentlichungsnummer 0 056 649 (Anmeldenummer 82 100 350.6) ist ein Videoempfangsgerät mit einem Videotextdecoder bekannt, mittels dem anstelle eines Fernsehbildes der in den Videosignalen übertragene Videotext auf dem Bildschirm des Videoempfangsgerätes dargestellt werden kann. In den Videotext-Signalweg ist bei dem bekannten Empfangsgerät eine Gruppenlaufzeit-Korrekturschaltung einschaltbar. An den Videotextdecoder ist eine Prüfschaltung angeschlossen, die bestimmte Teile des Rahmenwortes der Videotextübertragung prüft und beim Erkennen einer Gruppenlaufzeit-Verzerrung die Gruppenlaufzeit-Korrekturschaltung in den Videotext-Signalweg schaltet.

Bei dem immer mehr zunehmenden grenzüberschreitenden Empfang von Videoprogrammen und insbesondere durch den Empfang von Videoprogrammen über Satelliten tritt das Problem auf, dass die Videosendungen aus einzelnen Ländern eine unterschiedliche Gruppenlaufzeit-Vorverzerrung aufweisen, entsprechend den Normen für die Übertragung von Videosendungen der einzelnen Länder. Der Erfindung liegt deshalb die Aufgabe zugrunde, ein Videoempfangsgerät der im Oberbegriff des Patentanspruches 1 angegebenen Art derart auszubilden, dass es zum Empfang von Videosendungen aus Ländern mit unterschiedlicher Gruppenlaufzeit-Vorentzerrung geeignet ist und sich selbsttätig auf die unterschiedlichen Gruppenlaufzeit-Vorentzerrungen einstellt.

Diese Aufgabe wird nach der Erfindung durch die im kennzeichnenden Teil des Patentanspruches 1 angegebenen technischen Merkmale gelöst. Die Erfindung weist nicht nur den Vorteil auf, dass das Videoempfangsgerät eine durch die unterschiedliche Gruppenlaufzeit-Vorentzerrung im Empfangsgerät ausgelöste Gruppenlaufzeit-Verzerrung ausgleicht, ohne dass die das Gerät benutzende Person hierfür an dem Empfangsgerät zusätzliche Einstellungen vornehmen muss, sondern auch, dass auch sonstige Gruppenlauf-Verzerrungen, die zusätzlich auf dem Übertragungweg vom Sender zum Empfänger aufgetreten sind, selbsttätig ausgeglichen werden. Ausserdem werden durch die Massnahmen der Erfindung während jeder Art des Empfangs von Videosendungen Gruppenlaufzeit-Korrekturen selbsttätig durchgeführt, nicht nur beim Empfang bestimmter Sendungsarten, z.B. nicht nur beim eingeschalteten Empfang von Videotextsendungen.

Vorteilhafte Ausgestaltungen der Erfindung sind in den Unteransprüchen angegeben.

Die Erfindung wird nachfolgend anhand einiger vorteilhafter Ausführungsbeispiele näher erläutert. In den zugehörigen Zeichnungen zeigen

Fig. 1, 3 und 6 je ein Blockschaltbild eines Videoempfangsgerätes mit einer steuerbaren Gruppenlaufzeit-Korrekturschaltung im Übertragungsweg zwischen der Empfangsanordnung und der Wiedergabeanordnung des Gerätes,

Fig. 2 ein Diagramm mit dem zeitlichen Verlauf eines durch Gruppenlaufzeitabweichungen verzerrten Zeilensynchronimpulses und mit den zugehörigen Zeitfenstersignalen,

Fig. 4 eine ausführliche Schaltungsausbildung der in dem in Fig. 3 dargestellten Videoempfangsgerät enthaltenen Schwellwert- und Impulsformerschaltung,

Fig. 5 ein Diagramm der in Schwellwert- und Impulsformerschaltung gemäss Fig. 4 gebildeten Impulssignale,

Fig. 7 ein Diagramm der in der Prüfschaltung des in Fig. 6 dargestellten Videoempfangsgerätes auftretenden Signale.

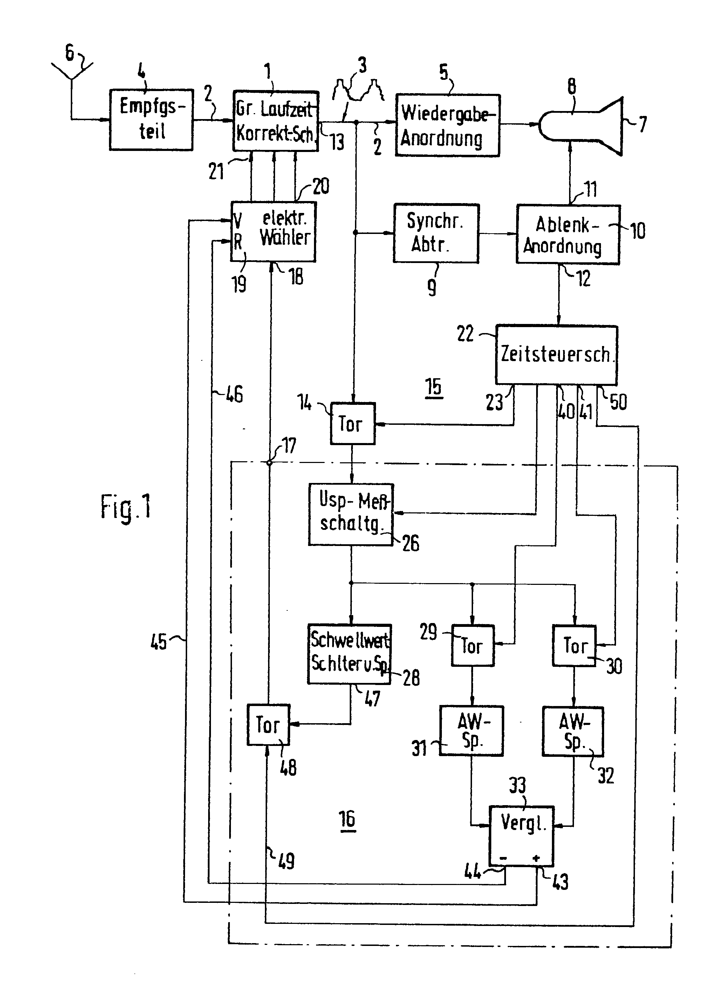

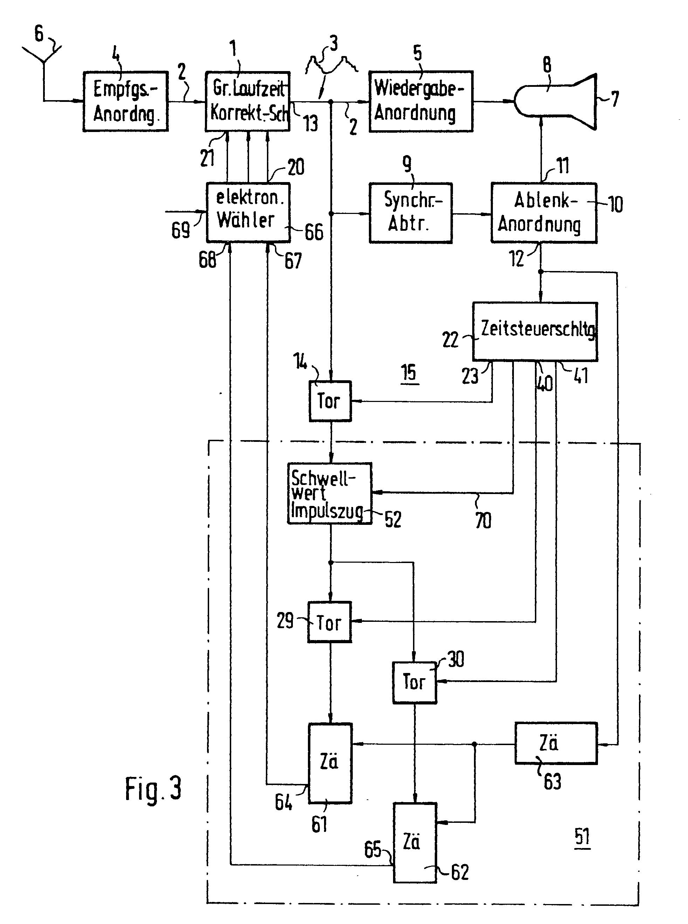

In der Fig. 1 ist ein Blockschaltbild eines Videoempfangsgeräts mit einer Gruppenlaufzeit-Korrekturschaltung 1 im unmittelbaren Übertragungsweg 2 für das Videosignalgemisch 3 zwischen der Empfangsanordnung 4 und der Wiedergabeanordnung 5 des Videoempfangsgerätes angeordnet. In der Empfangsanordnung 4 wird aus den an der Antenne 6 anliegenden Trägerwellen unterschiedlicher Fernsehsender die Trägerwelle des von dem Benutzer des Gerätes an der Empfangsanordnung eingestellten Senders ausgesiebt und das auf der Trägerwelle befindliche Videosignalgemisch demoduliert. Die Wiedergabeanordnung 5 des Videoempfangsgerätes bereitet das auf dem Übertragungsweg 2 befindliche Videosignalgemisch für eine Bilddarstellung auf dem Bildschirm 7 der Bildröhre 8 des Empfangsgerätes auf. In einer Synchronsignal-Abtrennschaltung 9 werden die in dem Videosignalgemisch befindlichen Synchronsignale abgetrennt und einer Ablenkanordnung 10 zugeführt, die die Ablenkströme für die Strahlablenkung (Ausgang 11) in der Bildröhre erzeugt und an einem Ausgang 12 die Austastsignale zum Austasten der Synchronimpulse des Videosignalgemisches erzeugt.

An den Ausgang 13 der Gruppenlaufzeit-Korrekturschaltung 1 ist über eine Torschaltung 14 einer Austastschaltung 15 eine Prüfschaltung 16 angeschlossen, deren Ausgang 17 an den Takteingang 18 eines elektronischen Wählers 19 angeschlossen ist. Die Ausgänge 20 des elektronischen Wählers sind mit Steuereingängen 21 der Gruppenlaufzeit-Korrekturschaltung 1 verbunden. Jedem der Steuereingänge 21 der Gruppenlaufzeit-Korrekturschaltung ist eine eigene, frequenzabhängige Gruppenlaufzeit-Kennlinie zugeordnet.

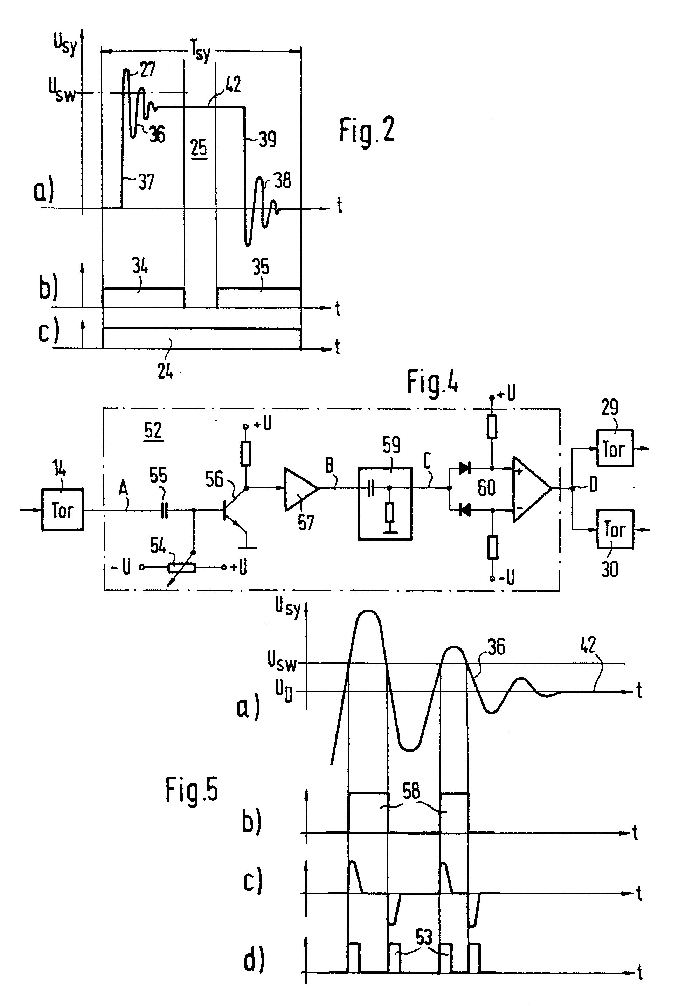

Die Austastschaltung 15 besteht im dargestellten Ausführungsbeispiel aus der Torschaltung 14 und einer Zeitsteuerschaltung 22. Letztere wird von den Austastsignalen der Ablenkanordnung 10 gesteuert und erzeugt an ihrem Ausgang 23 ein Zeitfenstersignal 24, das im Diagramm c) der Fig. 2 dargestellt ist und das in engen Grenzen die Zeitspanne $T_{Sy}$ umfasst, in der auf dem Übertragungsweg 2 in dem Videosignalgemisch 3 hinter dem Ausgang der Gruppenlaufzeit-Korrekturschaltung ein Zeilensynchronsignal 25 auftritt. In der Zeitspanne schaltet sie die Torschaltung 14 durchlässig. Eine Schaltung 26 zur Messung der Spitzenspannung misst in dieser Zeitspanne den Spannungswert der grössten Spannungsspitze am Zeilensynchronimpuls 25 und überträgt diesen Wert an eine Schwellwertschaltung 28 und über zwei Torschaltungen 29 und 30 an zwei Analogwertspeicher 31 und 32 einer Vergleicherschaltung 33. Die beiden Torschaltungen 29 und 30 werden von zwei Zeitfensterausschnittsignalen 34 und 35 gesteuert, die im Diagramm b) der Fig. 2 dargestellt sind, innerhalb des Zeitfenstersignals 24 liegen und von denen das Zeitfensterausschnittsignal 34 den Bereich der Einschwingungen 36 der Vorderflanke 37 und das Zeitfensterausschnittsignal 35 den Bereich der Ausschwingungen 38 der Rückflanke 39 des Zeilensynchronimpulses 25 umfassen. Die Zeitfensterausschnittsignale 34 und 35 werden ebenfalls von der Zeitsteuerschaltung 22 an deren Ausgängen 40 und 41 gebildet.

Die Amplitude der Einschwingungen 36 aus dem Dach 42 des Synchronimpulses 25 sind ein Mass für die Verzerrungen, die infolge von Laufzeitunterschieden an den Videosignalen auftreten. Der Ort der Schwingungen 36 auf dem Dach 42 der Synchronimpulse 25, nämlich ob sie hinter der Vorderflanke 37 oder vor der Rückflanke 39 des Zeilensynchronimpulses auftreten, ist ein Hinweis für die Richtung, in der die Gruppenlaufzeit innerhalb eines bestimmten Frequenzbereiches geändert werden muss, damit sich die Verzerrungen an den Videosignalen verringern.

Entsprechend dem Ergebnis des Vergleichers der in den Analogwertspeichern 31 und 32 gespeicherten Spannungswerte in der Vergleicherschaltung 33 erzeugt diese an einer ihrer Ausgänge 43 oder 44 ein Schaltsignal, das die Laufrichtung des elektronischen Wählers 19 über eine der Leitungen 45 oder 46 einstellt. Überschreitet der mit der Messschaltung 26 gemessene Spitzenwert $U_{Sy}$ einen in der Schwellwertschaltung 28 eingestellten Schwellwert $U_{sw}$, erzeugt die Schwellwertschaltung während einer vorgegebenen kurzen Zeit an ihrem Ausgang 47 eine Schaltspannung zum Durchlässigsteuern einer Torschaltung 48. Diese Torschaltung 48 liegt in einer Taktleitung 49 zwischen einem Schaltsignalausgang 50 der Zeitsteuerschaltung 22 und dem Takteingang 18 des elektronischen Wählers 19. Ein Schaltsignal am Ausgang 50 der Zeitsteuerschaltung 22 steuert dann den elektronischen Wähler 19 in der Richtung auf den nächsten Wählerschritt, dass die Gruppenlaufzeit-Korrekturschaltung 1 in eine Einstellung geringerer Verzerrungen der Videosignale eingestellt ist.

Das in Fig. 3 in einem Blockschaltbild dargestellte Videoempfangsgerät unterscheidet sich von dem in Fig. 1 dargestellten Videoempfangsgerät im wesentlichen nur in der Ausbildung der Prüfschaltung. Die Schaltungsanordnungen und Schaltungsteile, die in den in Fig. 1 und 3 dargestellten Videoempfangsgeräten übereinstimmen, sind deshalb mit den gleichen Bezugzeichen gekennzeichnet. Die Prüfschaltung 51 des in Fig. 3 dargestellten Videoempfangsgerätes enthält an ihrem Eingang eine Schwellwert-Impulsformerschaltung 52, deren Schaltungsausbildung in der Fig. 4 näher dargestellt ist. Diese Schaltung erzeugt aus den Schwingungen der im Diagramm a) der Fig. 5 dargestellten Einschwingung 36 auf dem Dach 42 des Synchronimpulses 25, der im Diagramm a) der Fig. 2 dargestellt ist, einen Impulszug mit den Impulsen 53, der im Diagramm d) der Fig. 5 dargestellt ist. Die Schwingungsteile der Einschwingung 36, die am Eingang A der Schaltung 52 eine an einem Spannungsteiler 54 eingestellte Schwellwertspannung $U_{sw}$ überschreiten, gelangen über einen Trennkondensator 55 und einen Transistor 56 in einen Begrenzerverstärker 57, der aus den den Schwellwert überschreitenden Schwingungsteilen Impulse 58 bildet. Diese am Ausgang B des Begrenzerverstärkers auftretenden und im Diagramm b) der Fig. 5 dargestellten Impulse werden in einer nachfolgenden Differenzierschaltung 59 differenziert und in einer nachfolgenden Impulsgleichrichtungsschaltung 60 in eine einheitliche Impulsrichtung gesetzt und geformt. Die am Ausgang C der Differenzierschaltung 59 erzeugten Differenzierimpulse sind im Diagramm c) der Fig. 5 dargestellt, während der Impulszug der Impulse 53 am Ausgang D der Impulsgleichrichterschaltung 60 im Diagramm d) der Fig. 5 dargestellt ist. Vom Ausgang der Schwellwert-Impulsformerschaltung 52 gelangen die Impulse 53 über die von der Zeitsteuerschaltung 22 mit den Zeitfensterausschnittsignalen 34 und 35 gesteuerten Torschaltungen 29 und 30 zum Takteingang von Impulszählern 61 und 62. Ein umlaufender Impulszähler 63 dient als Rückstellschaltung für die Impulszähler 61 und 62. Er wird im dargestellten Ausführungsbeispiel von den Austastsignalen am Ausgang 12 der Ablenkanordnung 10 getaktet und erzeugt nach einer vorbestimmten Anzahl von Austastsignalen ein Rückstellsignal für die Zähler 61 und 62. Das hat zur Folge, dass einzelne, beispielsweise durch sonstige Störungen erzeugte Überschwingungen an den Synchronimpulsen nicht zur Auswirkung an den Ausgängen 64 und 65 der Zähler 61 und 62 kommen und die Einstellung der Gruppenlaufzeit-Korrekturschaltung 1 nicht verändern können. Die Zähler 61 und 62 erzeugen bei einem vorbestimmten Zählerstand an ihrem Ausgang 64 und 65 ein Ausgangssignal das als Schaltsignal an die Stelleingänge 67 und 68 des elektronischen Wählers 66 gelangt, der über einen Setzeingang 69 in eine vorbestimmte Stellung eingestellt ist. Bei einer unzulässigen Verzerrung des Synchronimpulses 25 erreicht einer der beiden Zähler 61 und 62 den ein Schaltsignal erzeugenden Zählerstand vor der Rücksetzung des Zählers und schaltet damit den elektronischen Wähler um einen Schritt in die Richtung weiter, in der über eine Umschaltung der Gruppenlaufzeit-Korrekturschaltung 1 die Verzerrung der Videosignale vermindert wird.

Über die Leitung 70 kann eine Schaltung mit einem besonderen Zeitfensterausschnittsignal gesteuert werden, die den Schwellwert $U_{sw}$ an den Spannungswert des Daches 42 des Synchronimpulses 25 koppelt.

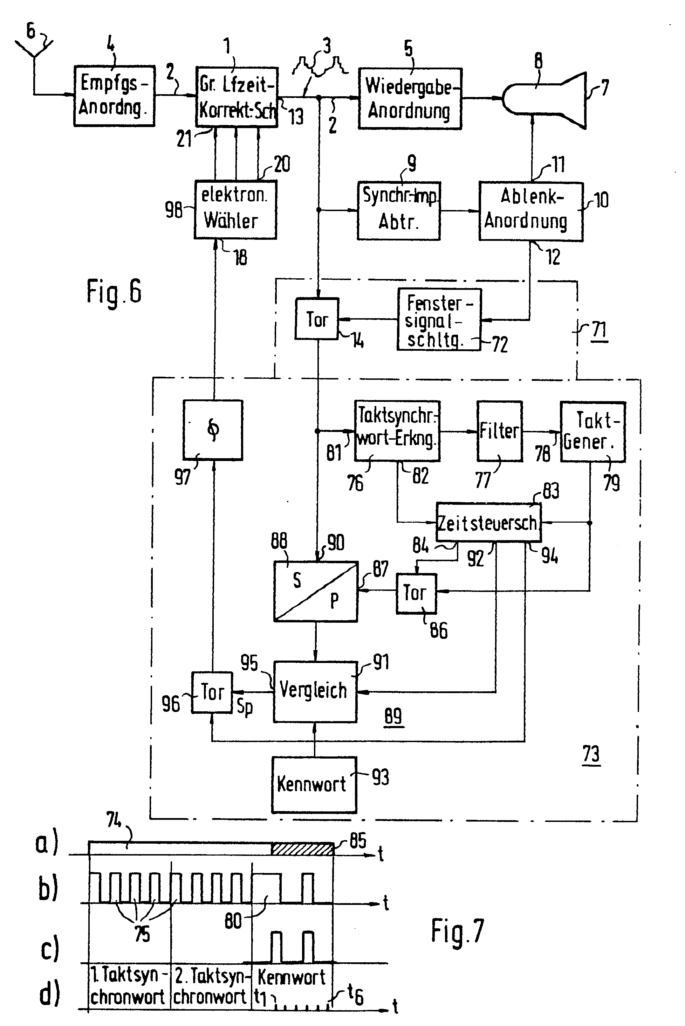

Das in Fig. 6 in einem Blockschaltbild dargestellte Ausführungsbeispiel eines Videoempfangsgerätes unterscheidet sich von den in den Fig. 1 und 3 dargestellten Videoempfangsgeräten durch eine andere Ausbildung der Austastschaltung und der Prüfschaltung. In den dargestellten Videoempfangsgeräten übereinstimmende Schaltungsanordnungen und Schaltungsteile sind in der Zeichnung mit übereinstimmenden Bezugszeichen gekennzeichnet. Im dargestellten Ausführungsbeispiel enthält die Austastschaltung 71 neben der den Ausgang 13 der Gruppenlaufzeit-Korrekturschaltung 1 mit dem Eingang der Prüfschaltung 73 verbindenden Torschaltung 14 eine Fenstersignalschaltung 72, die von den am Ausgang 12 der Ablenkanordnung 10 auftretenden Zeilensynchron-Austastsignalen gesteuert wird. Bei dem in Fig. 3 dargestellten Ausführungsbeispiel wird davon ausgegangen, dass in den normalen Fernsehübertragungen in bestimmten Bildzeilen, die beispielsweise innerhalb der Vertikal-Dunkeltastung der Empfangsgeräte liegen, zusätzliche Informationen übertragen werden, die an einer vorbestimmten Stelle dieser bestimmten Bildzeile wenigstens ein Taktsynchronwort und ein Kennwort in einer digitalen Form enthalten, wie dies beispielsweise im Diagramm b) der Fig. 7 dargestellt ist. Während dieser Zeit erzeugt die Fenstersignalschaltung 72 ein Zeitfenstersignal 74, das im Diagramm a) der Fig. 7 als Balken dargestellt ist und die Torschaltung 14 durchlässig steuert. Während des Zeitfenstersignals 74 gelangen im Videosignalgemisch 3 auf dem Übertragungsweg 2 enthaltene Taktsynchronimpulse 75 des ersten und zweiten Taktsynchronwortes über eine Taktsynchronwort-Erkennungsschaltung 76 und ein Filter 77 für die Frequenz der Taktsynchronimpulse an einen Synchroneingang 78 eines Taktgenerators 79. Sobald beim Impuls 80 des auf die Taktsynchronworte folgenden Kennwortes die am Eingang 81 der Taktsynchronwort-Erkennungsschaltung 76 eingehende Impulsfolge vom Muster der Taktfolge der Taktsynchronworte abweicht, erzeugt die Taktsynchronwort-Erkennungsschaltung an ihrem Steuerausgang 82 ein Schaltsignal, das eine vom Taktgenerator 79 gesteuerte Zeitsteuerschaltung 83 einschaltet. Die Zeitsteuerschaltung 83 erzeugt während der restlichen Zeit des Kennwortes an ihrem Ausgang 84 ein innerhalb des Zeitfenstersignals liegendes Zeitfensterausschnittsignal 85, das im Diagramm a) der Fig. 7 als gestrichelter Teil des Balkens 74 dargestellt ist und das eine Torschaltung 86 durchlässig steuert. Über diese Torschaltung 86 gelangen die Taktimpulse des Taktgenerators 79 zum Takteingang 87 eines Serien-Parallel-

Wandlers 88 einer Kennworterkennungsschaltung 89 der Prüfschaltung 73. Jeweils zu den Taktzeiten $t_1$ bis $t_6$, die im Diagramm d) der Fig. 7 dargestellt sind und die in einem anderen Ausführungsbeispiel unmittelbar von der Zeitsteuerschaltung 83 an deren unmittelbar mit dem Takteingang 87 des Serien-Parallel-Wandlers 88 verbundenen Ausganges 84 erzeugt werden, wird das am Dateneingang 90 des Serien-Parallel-Wandlers 88 anliegende Zeichen in den zugehörigen Parallelspeicherplatz des Serien-Parallel-Wandlers 88 eingespeichert und einer Vergleicherschaltung 91 zugeführt. Bei einem Steuersignal an einem Ausgang 92 der Zeitsteuerschaltung 83 wird dieses Datenwort in der Vergleicherschaltung 91 mit einem im Diagramm c) der Fig. 7 dargestellten, in einem Kennwortspeicher 93 gespeicherten Kennwort in der Gestalt einer bestimmten Impulsfolge verglichen. Bei einer Koinzidenz erzeugt die Vergleicherschaltung 91 während eines an einem Ausgang 94 der Zeitsteuerschaltung 83 erzeugten Schaltsignals an ihrem Vergleicherausgang 95 ein Sperrsignal für eine Torschaltung 96. Durch die Torschaltung 96 gelangende Schaltsignale vom Ausgang 94 der Zeitsteuerschaltung 83 werden gegebenenfalls eine bestimmte Zeit in einer Summenschaltung 97 summiert. Wenn in einer vorgegebenen Zeit die Anzahl der in der Summenschaltung 97 summierten Schaltsignale eine vorgegebene Zahl überschreiten, erzeugt die Summenschaltung 97 ein Ausgangssignal für den Takteingang 18 des elektronischen Wählers 98 und stellt diesen damit auf den nächsten Schritt, mit dem der elektronische Wähler eine andere Laufzeitkennlinie in der Gruppenlaufzeit-Korrekturschaltung 1 einstellt.

In einer anderen Ausgestaltung weist die Vergleicherschaltung 91 zwei Ausgänge auf, wobei ähnlich wie bei der Vergleicherschaltung 33 des in Fig. 1 dargestellten Ausführungsbeispieles eines Videoempfangsgerätes der Ausgang, an dem das Koinzidenzsignal auftritt, die Schaltrichtung für den elektronischen Wähler vorgibt, so dass die durch die nunmehr eingestellte Laufzeitkennlinie von der Gruppenlaufzeit verursachte Verzerrung der Videosignale geringer ist als vor dem Einstellvorgang.

**Patentansprüche**

1. Videoempfangsgerät
— mit einer Empfangsanordnung (4) und einer Wiedergabeanordnung (5),
— einer schaltbaren Gruppenlaufzeit-Korrekturschaltung (1),
— einer von den Synchronsignalen des Videosignals gesteuerten Signalaustastschaltung (15) zur Austastung eines im übertragenen Videosignalgemisch enthaltenen Signals, dessen Signalform von der Gruppenlaufzeit beeinflussbar ist.
— und mit einer Prüfschaltung (16) zur Prüfung der Signalform des mit der Austastschaltung ausgetasteten Signals und zur Ausgabe von Schaltsignalen an die Gruppenlaufzeit-Korrekturschaltung (1), wenn die Signalform des ausgetasteten Signals um ein vorgegebenes Mass von einer Normalform des Signals abweicht, dadurch gekennzeichnet,

— dass die Gruppenlaufzeit-Korrekturschaltung (1) ununterbrochen im unmittelbaren Übertragungsweg (2) der Videosignale (3) von der Empfangsanordnung (4) zur Wiedergabeanordnung (5) angeordnet ist,

— dass das mit der Austastschaltung (15) auszutastende Signal während der gesamten Dauer des Unterhaltungssendebetriebes eines Senders ein Bestandteil des Videosignalgemisches auf dem unmittelbaren Übertragungsweg von der Empfangsanordnung (4) zur Wiedergabeanordnung (5) ist,

— dass eine Zeitsteuerschaltung (22) der Signalaustastschaltung (15) während der vorgegebenen Übertragungszeit des auszutastenden Signals (25) ein von einem Synchrongenerator (10) gesteuertes Zeitfenstersignal (24) erzeugt und eine Torschaltung (14) steuert

— und dass die Torschaltung (14) während der Dauer des Zeitfenstersignals (24) den Eingang der Prüfschaltung (16) mit dem Ausgang (13) der Gruppenlaufzeit-Korrekturschaltung verbindet.

2. Videoempfangsgerät nach Anspruch 1, gekennzeichnet durch ein Zeitfenstersignal (24), das die Zeitspanne des Auftretens eines übertragenen, vorbestimmten Synchronimpulses (25) umfasst.

3. Videoempfangsgerät nach Anspruch 2, dadurch gekennzeichnet, dass die Prüfschaltung (16) eine Messschaltung (26) zur Messung der Spitzenspannung der Welligkeit des Daches (42) der Synchronimpulse (25) ist und beim Überschreiten eines vorbestimmten Wertes (U$_{sw}$) der Spitzenspannung der Welligkeit ein Schaltsignal erzeugt, das an einem Steuereingang (21) der Gruppenlaufzeit-Korrekturschaltung (1) deren Gruppenlaufzeit umschaltet.

4. Videoempfangsgerät nach Anspruch 2, gekennzeichnet durch eine Prüfschaltung (51) mit folgenden Schaltungen:

— einer Impulsformerschaltung (52), die die Schwingungen (36) der Welligkeit des Daches (42) der Synchronimpulse (25) in eine Impulsschwingung (53) umwandelt,

— einem Zähler (61) zur Zählung der Impulse der Impulsschwingung (53), der beim Überschreiten eines vorgegebenen Zählerstandes ein Ausgangssignal erzeugt, das an einem Steuereingang (21) der Gruppenlaufzeit-Korrekturschaltung (1) deren Gruppenlaufzeit umschaltet,

— einer Rückstellschaltung (63), die den Zähler nach einer vorgegebenen Zeitspanne rückstellt.

5. Videoempfangsgerät nach Anspruch 3 oder 4, dadurch gekennzeichnet,

— dass die Zeitsteuerschaltung (22) während der ersten Hälfte des Zeitfenstersignals (24) ein erstes Zeitfensterausschnittsignal (34) und während der zweiten Hälfte des Zeitfenstersignals ein zweites Zeitfensterausschnittsignal (35) erzeugt,

— dass eine Spannungsmessschaltung (26) der Prüfschaltung (16) während der beiden Zeitfensterausschnittsignale die Spitzenspannung der Welligkeit des ausgetesteten Synchronsignals (25) misst und in einer Vergleicherschaltung (33) miteinander vergleicht

— und dass die Vergleicherschaltung (33) aus dem Vergleich der während der beiden Zeitfensterausschnittsignale (34, 35) gemessenen Spitzenspannung ein die Richtung der Laufzeitänderung der durch das Schaltsignal der Prüfschaltung (16) umgeschalteten Gruppenlaufzeit der Gruppenlaufzeit-Korrekturschaltung (1) erzeugt, derart, dass die Verzerrung der Synchronsignale abnimmt.

6. Videoempfangsgerät nach Anspruch 1, dadurch gekennzeichnet,

— dass das Zeitfenstersignal (74) die Zeitspanne der Übertragung der ersten Steuerwörter mit den Taktsynchronworten und dem Kennwort einer Textdatenübertragung einer vorbestimmten Bildzeile während der Vertikal-Dunkeltastung umfasst,

— dass eine an den Ausgang der Torschaltung (14) angeschlossene Taktsynchronwort-Erkennungsschaltung (76) beim Übergang des Taktsynchronwortes in ein anderes Zeichen ein Ausgangssignal erzeugt und damit eine Kennwort-Erkennungsschaltung (89) einschaltet

— und dass die Kennwort-Erkennungsschaltung bei Nichterkennen des Kennwortes ein Schaltsignal zur Umschaltung der Gruppenlaufzeit der Gruppenlaufzeit-Korrekturschaltung (1) erzeugt.

7. Videoempfangsgerät nach Anspruch 6, dadurch gekennzeichnet, dass die Kennwort-Erkennungsschaltung (89) eine Vergleicherschaltung (91), einen an den einen Vergleichereingang angeschlossenen Kennwortspeicher (93), einen an den anderen Vergleichereingang angeschlossenen, vom Takt eines Datentaktoszillators (79) gesteuerten Serien-Parallel-Wandler (88) für das übertragene Kennwort und eine an den Ausgang (95) der Vergleicherschaltung (91) angeschlossene Torschaltung (96) enthält, die während eines durch ein Ausgangssignal der Vergleicherschaltung angezeigten erfolgreichen Vergleiches die Übertragung des Schaltsignals zum Steuereingang der Gruppenlaufzeit-Korrekturschaltung (1) sperrt.

8. Videoempfangsgerät nach einem der vorhergehenden Ansprüche, dadurch gekennzeichnet, dass zwischen den Schaltausgang (17) der Prüfschaltung (16) einerseits und die Schalteingänge (21) der Gruppenlaufzeit-Korrekturschaltung (1) ein elektronischer Wähler (19) geschaltet ist, der durch die Schaltsignale der Prüfschaltung (16) schrittweise weiterschaltbar ist.

9. Videoempfangsgerät nach Anspruch 8, dadurch gekennzeichnet, dass der elektronische Wähler (19) einen Vorwärts- und einen Rückwärtseingang (V, R) enthält, an denen ein Signal die Laufrichtung des Wählers einstellt.

**Claims**

1. Television receiver comprising

— a receiving section (4) and a reproducing section (5),

— a switchable envelope-delay-correcting circuit (1),

— a gating circuit (15) controlled by the synchronizing signals of the composite video signal and designed to gate a signal which is contained in the transmitted composite video signal and whose waveform is influenceable by the envelope delay and

— a check circuit (16) for checking the waveform of the signal gated by the gating circuit and for delivering switching signals to the enveloped-delay-correcting circuit (1) if the waveform of the gated signal differs from a standard waveform to a predetermined extent, characterized in

— that the envelope-delay-correcting circuit (1) is constantly included in the direct transmission path (2) of the video signals (3) from the receiving section (4) to the reproducing section (5),

— that throughout the transmission of television programmes by a transmitter the signal to be gated by the gating circuit (15) is part of the composite video signal on the direct transmission path from the receiving section (4) to the reproducing section (5),

— that, during a predetermined transmission time of the signal (25) to be gated, a timer (22) of the gating circuit (15) generates a time-window signal (24) controlled by a synchronizing-pulse generator (10) and controls a gate (14), and

— during the presence of the time-window signal (24), the gate (14) connects the input of the check circuit (16) to the output (13) of the envelope-delay-correcting circuit.

2. A television receiver as claimed in Claim 1, characterized by a time-window signal (24) covering the duration of the occurrence of a transmitted, predetermined synchronizing pulse (25).

3. A television receiver as claimed in Claim 2, characterized in that the check circuit (16) is a measuring circuit (26) for measuring the peak value of the ripple of the tops (42) of the synchronizing pulses (25) and, when said peak value exceeds a predetermined value ($U_{sw}$) of the ripple voltage, produces a switching signal which is applied to a contro input (21) of the envelope-delay-correcting circuit (1) to charge the envelope delay of the latter.

4. A television receiver as claimed in Claim 2, characterized by a check circuit (51) comprising the following subcircuits:

— a pulse shaper (52) which changes the oscillations (36) of the ripple of the tops (42) of the synchronizing pulses (25) into a pulse waveform (53),

— a counter (61) for counting the pulses of the pulse waveform (53) which, when a predetermined count is exceed, generates an output signal which is applied to a control input (21) of the envelope-delay-correcting circuit (1) to change the envelope delay of the latter, and

— a resetting circuit (63) which resets the counter after a predetermined period of time.

5. A television receiver as claimed in Claim 3 or 4, characterized in

— that the timer (22) generates a first time-window-section signal (34) during the first half of the time-window signal (24) and a second time-window-section signal (35) during the second half of the time-window signal,

— that a voltage-measuring circuit (26) of the check circuit (16) measures the peak value of the ripple of the gated synchronizing signal (25) during the two time-window-section signals, and that the two measured values are compared in a comparator (33), and

— that the comparator (33) derives from the result of the comparison between the peak values measured during the two time-window-section signals (34, 35) a switching signal for setting the direction in which the envelope delay of the envelope-delay-correcting circuit (1) is changed so as to reduce the distortion of the synchronizing signals.

6. A television receiver as claimed in Claim 1, characterized in

— that the time-window signal (74) covers the duration of the transmission of the first control words with the clock-synchronizing words and the word for identifying a text data transmission of a predetermined scanning line during the vertical blanking interval,

— that, upon the transmission of the clock-synchronizing word into another character, a clock-synchronizing-word-recognition circuit (76) connected to the output of the gate (14) generates an output signal which activates an identification-word-recognition circuit (89), and

— that, if it does not recognize the identification word, the identification-word-recognition circuit generates a switching signal for changing the envelope delay of the envelope-delay-correcting circuit (1).

7. A television receiver as claimed in Claim 6, characterized in that the identification-word-recognition circuit (89) contains a comparator (91), an identification-word memory (93) connected to one of the comparator inputs, a serial-parallel converter (88) for the transmitted identification word which is connected to the other comparator input and controlled by the clock pulses provided by a data clock generator (79), and a gate (96) which is connected to the output (95) of the comparator (91) and which blocks the transmission of the switching signal to the control input of the envelope-delay-correcting circuit (1) as long as an output signal of the comparator indicates a successful comparison.

8. A television receiver as claimed in any of the preceding claims, characterized in that between the switching output (17) of the check circuit (16) and the switching inputs (21) of the envelope-delay-correcting circuit (1) there is inserted an electronic selector (19) which can be stepped by the switching signals from the check circuit (16).

9. A television receiver as claimed in Claim 8, characterized in that the electronic selector (19) has a forward input (V) and a reverse input (R) at which a signal sets the selector's direction of stepping.

## Revendications

1. Récepteur de télévision comprenant:

— une section de réception (4) est une section de reproduction (5),

— un circuit de correction de retard de groupe commutable (1),

— un circuit de sélection de signal (15) commandé par les signaux de synchronisation du signal vidéo et conçu pour la sélection d'un signal qui est contenu dans le signal vidéo composite émis et dont la forme d'onde peut être influencée par le retard de groupe, et

— un circuit de contrôle (16) pour contrôler la forme d'onde du signal transmis par le circuit de sélection et pour fournir des signaux de commutation au circuit de correction de retard de groupe commutable (1), lorsque la forme d'onde du signal transmis diffère d'une forme d'onde normale dans un rapport prédéterminé,
caractérisé en ce que:

— le circuit de correction de retard de groupe (1) est constamment inclus dans le trajet direct (2) des signaux vidéo (3) de la section de réception (4) à la section de reproduction (5),

— durant toute transmission de programmes par un émetteur, le signal devant être sélectionné par le circuit de selection (15) fait partie du signal vidéo composite sur le trajet de signal direct de la section de réception (4) à la section de reproduction (5),

— durant un temps de transmission prédéterminé du signal (25) à sélectionner, un circuit de temporisation (22) du circuit de sélection (15) engendre un signal de fenêtre temporelle (24), sous la commande d'un générateur d'impulsions de synchronisation (10), et commande une porte (14), et

— durant la présence du signal de fenêtre temporelle (24), la porte (14) connecte l'entrée du circuit de contrôle (16) à la sortie (13) du circuit de correction de retard de groupe.

2. Récepteur de télévision selon la revendication 1, caractérisé en ce qu'un signal de fenêtre temporelle (24) recouvre la durée d'apparition d'une impulsion de synchronisation prédéterminée transmise (25).

3. Récepteur de télévision selon la revendication 2, caractérisé en ce que le circuit de contrôle (16) est un circuit de mesure (26) de la valeur de crête des ondulations des sommets (42) des impulsions de synchronisation (25) qui, lorsque cette valeur crête dépasse une valeur prédéterminée ($U_{sw}$), produit un signal de commutation qui est appliqué à l'entrée de commande (21) du circuit de correction de retard de groupe (1) pour modifier le retard de groupe de ce dernier.

4. Récepteur de télévision selon la revendication 2, caractérisé par un circuit de contrôle (51) comprenant les éléments de circuit suivants:

— un circuit formeur d'impulsions (52) changeant les oscillations (36) des ondulations des sommets (42) des impulsions de synchronisation (25) et un train d'impulsions (53),

— un compteur (61), pour compter les impulsions du train d'impulsions (53), lequel, lorsqu'il dépasse un compte prédéterminé, fournit un signal de sortie qui est appliqué à une entrée de commande (21) du circuit de correction de retard de groupe (1), pour modifier le retard de groupe de ce dernier, et

— un circuit de réinitialisation (63) qui remet le compteur en position initiale, après une période temps prédéterminée.

5. Récepteur de télévision selon la revendication 3 ou 4, caractérisé en ce que:

— le circuit de temporisation (22) fournit un premier signal de section de fenêtre temporelle (34) durant la première moitié du signal de fenêtre temporelle (24) et un deuxième signal de section de fenêtre temporelle (35) durant la deuxième moitié du signal de fenêtre temporelle,

— un circuit de mesure de tension (26) du circuit de contrôle (16) mesure la valeur crête de l'ondulation du signal de synchronisation sélectionné (25) durant les deux signaux de sections de fenêtre temporelle, les deux valeurs measurés étant comparées dans un comparateur (33), et

— le comparateur (33) dérive un signal de commutation du résultat de la comparaison entre les valeurs crête mesurées durant les deux signaux de sections de fenêtre temporelle (34, 35) pour régler le sens de la modification du retard de groupe dans le circuit de correction de retard de groupe (1) commandé par le signal de commutation du circuit de contrôle (16), afin de réduire en conséquence la distorsion du signal de synchronisation.

6. Récepteur de télévision selon la revendication 1, caractérisé en ce que:

— le signal de fenêtre temporelle (74) recouvre la durée de transmission de premiers mots de commande des mots de synchronisation d'horloge et du mot d'identification de transmission de données de texte d'une ligne de balayage prédéterminée durant l'intervalle de suppression vertical,

— à la transition du mot de synchronisation d'horloge à un autre caractère, un circuit de reconnaissance de mot de synchronisation d'horloge (76) connecté à la sortie de la porte (14) fournit un signal de sortie qui met en action un circuit de reconnaissance de mot d'identification (89), et

— à la reconnaissance de l'absence du mot d'identification, le circuit de reconnaissance de mot d'identification fournit un signal de commutation pour modifier le retard de groupe du circuit de correction de retard de groupe (1).

7. Récepteur de télévision selon la revendication 6, caractérisé en ce que le circuit de reconnaissance de mot d'identification (89) contient un comparateur (91), une mémoire de mot d'identification (93) connectée à l'une des entrées du comparateur, un convertisseur série-parallèle (88) pour les mots d'identification transmis, qui est connecté à l'autre entrée du comparateur et commandé par les signaux d'horloge d'un générateur d'horloge de données (79) et une porte (96) qui est connectée à la sortie (95) du comparateur (91) et qui bloque le passage du signal de commutation vers l'entrée de commande du circuit de correction de retard de groupe (1), tant que le signal de sortie du comparateur indique une comparaison satisfaisante.

8. Récepteur de télévision selon l'une quelconque des revendications précédentes, caractérisé en ce que, entre la sortie (17) du circuit de contrôle (16), d'une part, et les entrées (21) du circuit de correction de retard de groupe (1), est inséré un sélecteur électronique (19) qui avance sous l'effet des signaux de commutation du circuit de contrôle (16).

9. Récepteur de télévision selon la revendication 8, caractérisé en ce que le sélecteur électronique (19) possède une entrée d'avance (V) et une entrée de recul (R), par lesquelles un signal détermine la direction du mouvement du sélecteur.

Fig.1

Fig. 3

Fig.2

Fig.4

Fig.5

0 127 040

Fig.6

Fig.7

15